# EUROPÄISCHE PATENTSCHRIFT

(11) **EP 3 475 922 B1**
(45) Veröffentlichungstag und Bekanntmachung des Hinweises auf die Patenterteilung: **19.08.2020**
(21) Anmeldenummer: 17755058.9
(22) Anmeldetag: 20.06.2017
(51) Int. Cl.: G06T 19/00

(54) **VERFAHREN UND FAHRZEUGSTEUERSYSTEM ZUM ERZEUGEN VON ABBILDUNGEN EINES UMFELDMODELLS UND ENTSPRECHENDES FAHRZEUG**
METHOD AND VEHICLE CONTROL SYSTEM FOR PRODUCING IMAGES OF A SURROUNDINGS MODEL, AND CORRESPONDING VEHICLE
PROCÉDÉ ET SYSTÈME DE COMMANDE DE VÉHICULE PERMETTANT DE GÉNÉRER DES IMAGES D'UN MODÈLE D'ENVIRONNEMENT ET VÉHICULE CORRESPONDANT

(30) Priorität: 27.06.2016 DE 102016211453
(43) Veröffentlichungstag der Anmeldung: 01.05.2019
(73) Patentinhaber: Conti Temic microelectronic GmbH, 90411 Nürnberg (DE)
(72) Erfinder: MILZ, Stefan, 07929 Sallburg-Ebersdorf (DE); ARBEITER, Georg, 96328 Küps (DE)
(86) Internationale Anmeldenummer: PCT/DE2017/200055
(87) Internationale Veröffentlichungsnummer: WO 2018/001422

(56) Entgegenhaltungen:
- SEIYA SHIMIZU ET AL: "Wraparound View System for Motor Vehicles", FUJITSU-SCIENTIFIC AND TECHNICAL JOURNAL., Bd. 46, 1. Januar 2010 (2010-01-01), Seiten 95-102, XP055349887, JP ISSN: 0016-2523
- ADEL AHMED ET AL: "Automatic camera path generation for graph navigation in 3D", ADVANCES IN ONTOLOGIES, AUSTRALIAN COMPUTER SOCIETY, INC, P.O. BOX 319 DARLINGHURST, NSW 2010 AUSTRALIA, 1. Januar 2005 (2005-01-01), Seiten 27-32, XP058214471, ISSN: 1445-1336 ISBN: 978-1-920682-36-1
- Suehiro Kawanishi: "Automotive graphics SoC for 360° wraparound view system", Fujitsu scientific & technical journal, 1. Januar 2013 (2013-01-01), Seiten 91-96, XP055406438, 日本 Gefunden im Internet: URL:https://www.fujitsu.com/global/documen ts/about/resources/publications/fstj/archi ves/vol49-1/paper14.pdf

## Beschreibung

Die vorliegende Erfindung betrifft ein Verfahren und ein Fahrzeugsteuersystem für ein Fahrzeug zum Erzeugen von kontinuierlichen Abbildungen eines gespeicherten dreidimensionalen Umfeldmodells eines Fahrzeugs sowie ein Fahrzeug.

Umfeldmodelle für Fahrzeuge, wie etwa aus der WO 2013/060323 A1 bekannt, liefern Informationen über Objekte in einem Umfeld des Fahrzeugs und erlauben dadurch einem Fahrer oder einem Fahrerassistenzsystem befahrbare Bereiche zu erkennen.

Mittels virtueller Kameras können Abbildungen von Teilbereichen des Umfeldmodells erzeugt werden und dem Fahrer auf einem Fahrzeugdisplay angezeigt werden. SEIYA SHIMIZU ET AL: "Wraparound View System for Motor Vehicles" beschreibt ein Verfahren zum Erzeugen von 360 Abbildungen eines gespeicherten dreidimensionalen Umfeldmodells (31) eines Fahrzeugs, wobei die Ansicht einer virtuelle Kamera von einem Punkt A zu einem Punkt B animiert wird.

Oftmals kann es vorteilhaft sein, zwischen verschiedenen Ansichten zu wechseln, etwa um beim Rückwärtsfahren oder Einbiegen in eine unübersichtliche Straße einen besseren Überblick zu erhalten. Durch einfache Interpolation zwischen einer ersten virtuellen Kamera in dem Umfeldmodell und einer zweiten virtuellen Kamera in dem Umfeldmodell kann jedoch der Fall auftreten, dass die Orientierung der virtuellen Kamera auf dem Interpolationspfad in eine ungünstige Richtung zeigt. Insbesondere kann in einer derartigen Richtung Bildinformation fehlen, so dass eine Anzeige nicht mehr möglich ist und das Verfahren nicht ausführbar ist.

Es ist daher eine Aufgabe der Erfindung, kontinuierliche Abbildungen eines Umfeldmodells zu erzeugen, wobei die genannten ungewünschten Orientierungen der virtuellen Kamera vermieden werden.

Diese Aufgabe wird gelöst durch ein Verfahren zum Erzeugen von kontinuierlichen Abbildungen eines gespeicherten dreidimensionalen Umfeldmodells eines Fahrzeugs mit den Merkmalen des Patentanspruchs 1, ein Fahrzeugsteuersystem eines Fahrzeugs zum Erzeugen von kontinuierlichen Abbildungen eines gespeicherten dreidimensionalen Umfeldmodells des Fahrzeugs mit den Merkmalen des Patentanspruchs 10 und durch ein Fahrzeug mit den Merkmalen des Patentanspruchs 15.

Gemäß einem ersten Aspekt schafft die Erfindung demnach ein Verfahren zum Erzeugen von kontinuierlichen Abbildungen eines gespeicherten dreidimensionalen Umfeldmodells eines Fahrzeugs. Durch eine Kameraeinrichtung des Fahrzeugs wird mindestens ein Kamerabild erzeugt und das erzeugte Kamerabild auf eine Projektionsfläche in dem gespeicherten dreidimensionalen Umfeldmodell des Fahrzeugs projiziert. Mittels einer in dem Umfeldmodell beweglichen virtuellen Kamera werden kontinuierliche Abbildungen der Projektionsfläche erzeugt und die erzeugten kontinuierlichen Abbildungen ausgegeben. Die virtuelle Kamera umfasst hierbei eine Menge von Kameraparametern, deren Elemente eine Kameraposition der virtuellen Kamera und eine optische Achse der virtuellen Kamera umfassen. Entlang eines ersten Bewegungspfades in dem Umfeldmodell wird die Menge von Kameraparametern der virtuellen Kamera zwischen einer vorgegebenen ersten Menge von Kameraparametern und einer zweiten Menge von Kameraparametern interpoliert. Weiter wird entlang eines zweiten Bewegungspfades in dem Umfeldmodell die Menge von Kameraparametern der virtuellen Kamera kontinuierlich zwischen der zweiten Menge von Kameraparametern und einer vorgegebenen dritten Menge von Kameraparametern interpoliert. Diejenige optische Achse der virtuellen Kamera, welche ein Element der zweiten Menge von Kameraparametern ist, wird derart bestimmt, dass sie durch einen vorgegebenen Achsenpunkt verläuft, welcher auf einer Verbindungsstrecke zwischen einem ersten Bezugspunkt und einem zweiten Bezugspunkt liegt. Der erste Bezugspunkt ist ein vorgegebener Punkt derjenigen optischen Achse der virtuellen Kamera, welche ein Element der ersten Menge von Kameraparametern ist. Der zweite Bezugspunkt ist ein vorgegebener Punkt derjenigen optischen Achse der virtuellen Kamera, welche ein Element der dritten Menge von Kameraparametern ist.

Unter einer Abbildung des Umfeldmodells wird ein mittels der virtuellen Kamera erzeugtes Abbild eines bestimmten räumlichen Teilbereichs des Umfeldmodells verstanden, wobei das Abbild von einer Position und Ausrichtung der virtuellen Kamera abhängt.

Unter der Projektionsfläche ist eine zweidimensionale Hyperfläche in dem dreidimensionalen Umfeldmodell zu verstehen, welche beliebig geformt und gekrümmt sein kann. Die Projektionsfläche kann beispielsweise eine flache Ebene, ein Kugelschalensegment, eine zylinderförmige Fläche oder eine paraboloidische oder hyperboloidische Fläche sein.

Die optischen Achsen erstrecken sich von der entsprechenden Kameraposition in die Erfassungsrichtung der virtuellen Kamera. Die optischen Achsen der ersten und dritten Menge von Kameraparametern sind vorzugweise auf die Projektionsfläche ausgerichtet.

Die Erfindung erlaubt es, durch die erste und dritte Menge von Kameraparametern eine Anfangs- und Endposition der virtuellen Kamera mit entsprechenden Orientierungen vorzugeben, zwischen welchen kontinuierlich interpoliert wird. Hierbei wird durch die zweite Menge von Kameraparametern eine zusätzliche Stützstelle definiert, so dass der Interpolationspfad sich in den ersten und den zweiten Bewegungspfad aufteilt. Die an der Stützstelle vorgegebenen Kameraparameter sind durch die erfindungsgemäße Konstruktion derart gewählt, dass bei der Interpolation verhindert wird, dass sich die Orientierung der virtuellen Kamera derart ändert, dass sie auf einen nicht anzeigbaren, bzw. nicht mit Bildinformationen versehenen Bereich des Umfeldmodells ausgerichtet ist. Das erfindungsgemäße Verfahren ermöglicht somit das Erzeugen von kontinuierlichen Abbildungen. Das erfindungsgemäße Verfahren erhöht die Sicherheit, da dem Fahrer korrekte und ununterbrochene, das heißt kontinuierliche Abbildungen angezeigt werden und dieser dadurch die Straßensituation besser einschätzen kann. Besonders vorteilhaft ist das Verfahren in Kombination mit einem Fahrerassistenzsystem, welches das Fahrzeug teilautonom oder autonom steuert und daher auf korrekte Umfeldinformationen angewiesen ist.

Gemäß einer bevorzugten Weiterbildung des Verfahrens beschreiben der erste Bewegungspfad und der zweite Bewegungspfad einen Kreisabschnitt. Dadurch wird eine besonders einfache Interpolation der Kameraparameter ermöglicht.

Gemäß einer bevorzugten Weiterbildung des Verfahrens wird die Interpolation der Kameraposition der beweglichen virtuellen Kamera entlang des ersten Bewegungspfades und/oder entlang des zweiten Bewegungspfades durch sphärische lineare Interpolation (SLERP) durchgeführt.

Gemäß einer weiteren bevorzugten Ausführungsform des Verfahrens wird die Interpolation der optischen Achse der beweglichen virtuellen Kamera entlang des ersten Bewegungspfades und/oder entlang des zweiten Bewegungspfades durch sphärische lineare Interpolation (SLERP) durchgeführt.

Gemäß einer weiteren Ausführungsform des Verfahrens liegt die Kameraposition, welche ein Element der zweiten Menge von Kameraparametern ist, in einem mittleren Drittel des Kreisabschnitts und insbesondere auf einem mittleren Punkt des Kreisabschnitts. Dadurch ist die Länge des ersten Bewegungspfades im Wesentlichen gleich groß wie die Länge des zweiten Bewegungspfades, so dass eine natürliche und gleichmäßige Interpolation ermöglicht wird.

Gemäß einer bevorzugten Weiterbildung des Verfahrens ist ein Abstand des ersten Bezugspunkts von derjenigen Kameraposition, welche ein Element der ersten Menge von Kameraparametern ist, im Wesentlichen gleich groß wie ein Abstand des zweiten Bezugspunkts von derjenigen Kameraposition, welche ein Element der dritten Menge von Kameraparametern ist. Somit wird garantiert, dass die optische Achse am Übergangspunkt von dem ersten Bewegungspfad zu dem zweiten Bewegungspfad, welche durch die optische Achse der zweiten Menge von Kameraparametern gegeben ist, in die korrekte Richtung ausgerichtet ist.

Gemäß einer bevorzugten Weiterbildung des Verfahrens liegt der vorgegebene Verbindungspunkt im Wesentlichen in einer Mitte der Verbindungsstrecke zwischen dem ersten Bezugspunkt und dem zweiten Bezugspunkt.

Gemäß des Verfahrens steuert ein Fahrerassistenzsystem anhand der ausgegebenen kontinuierlichen Abbildungen eine Fahrzeugfunktion des Fahrzeugs. Die Fahrzeugfunktionen können ein Ansteuern und Aktivieren oder Deaktivieren von Aktoren, wie etwa Blinkern oder Seitenspiegeln, oder auch das halbautonome oder autonome Beschleunigen, Abbremsen oder Lenken des Fahrzeugs umfassen.

Gemäß einer bevorzugten Weiterbildung des Verfahrens werden die ausgegebenen kontinuierlichen Abbildungen auf einer Anzeigeeinrichtung einem Fahrer des Fahrzeugs angezeigt.

Gemäß einem zweiten Aspekt betrifft die Erfindung ein Fahrzeugsteuersystem eines Fahrzeugs zum Erzeugen von kontinuierlichen Abbildungen eines gespeicherten dreidimensionalen Umfeldmodells des Fahrzeugs. Das Fahrzeugsteuersystem umfasst eine Kameraeinrichtung des Fahrzeugs zum Erzeugen von mindestens einem Kamerabild sowie eine Recheneinrichtung. Die Recheneinrichtung ist dazu ausgebildet, das erzeugte Kamerabild auf eine Projektionsfläche in dem gespeicherten dreidimensionalen Umfeldmodell des Fahrzeugs zu projizieren, und kontinuierliche Abbildungen der Projektionsfläche mittels einer beweglichen virtuellen Kamera zu erzeugen. Weiter umfasst das Fahrzeugsteuersystem eine Ausgabeeinrichtung, welche dazu ausgebildet ist, die erzeugten kontinuierlichen Abbildungen auszugeben. Die virtuelle Kamera weist eine Menge von Kameraparametern auf, deren Elemente eine Kameraposition der virtuellen Kamera und eine optische Achse der virtuellen Kamera umfassen. Weiter ist die Recheneinrichtung dazu ausgebildet, die Menge von Kameraparametern entlang eines ersten Bewegungspfades in dem Umfeldmodell kontinuierlich zwischen einer vorgegebenen ersten Menge von Kameraparametern und einer zweiten Menge von Kameraparametern zu interpolieren. Weiter ist die Recheneinrichtung dazu ausgebildet, entlang eines zweiten Bewegungspfades in dem Umfeldmodell die Kameraparameter der virtuellen Kamera kontinuierlich zwischen der zweiten Menge von Kameraparametern und einer vorgegebenen dritten Menge von Kameraparametern zu interpolieren. Die Recheneinrichtung ist weiter dazu ausgebildet ist, diejenige optische Achse der virtuellen Kamera, welche ein Element der zweiten Menge von Kameraparametern ist, derart zu bestimmen, dass sie durch einen vorgegebenen Achsenpunkt verläuft, welcher auf einer Verbindungsstrecke zwischen einem ersten Bezugspunkt und einem zweiten Bezugspunkt liegt. Der erste Bezugspunkt ist hierbei ein vorgegebener Punkt derjenigen optischen Achse der virtuellen Kamera, welche ein Element der ersten Menge von Kameraparametern ist. Weiter ist der zweite Bezugspunkt ein vorgegebener Punkt derjenigen optischen Achse der virtuellen Kamera, welche ein Element der dritten Menge von Kameraparametern ist. Vorzugsweise ist die Recheneinrichtung dazu ausgebildet, den Achsenpunkt, den ersten Bezugspunkt und den zweiten Bezugspunkt zu bestimmen.

Gemäß einer bevorzugten Ausführungsform des Fahrzeugsteuersystems beschreiben der erste Bewegungspfad und der zweite Bewegungspfad in dem Umfeldmodell einen Kreisabschnitt.

Gemäß einer bevorzugten Ausführungsform des Fahrzeugsteuersystems ist die Recheneinrichtung dazu ausgebildet, die Kameraposition der beweglichen virtuellen Kamera entlang des ersten Bewegungspfades und/oder entlang des zweiten Bewegungspfades durch sphärische lineare Interpolation (SLERP) zu interpolieren.

Gemäß der Erfindung umfasst das Fahrzeugsteuersystem ein Fahrerassistenzsystem, welches dazu ausgebildet ist, anhand der ausgegebenen kontinuierlichen Abbildungen eine Fahrzeugfunktion des Fahrzeugs zu steuern.

Gemäß einer weiteren bevorzugten Ausführungsform umfasst die Ausgabeeinrichtung eine Anzeigeeinrichtung, welche dazu ausgebildet ist, die ausgegebenen kontinuierlichen Abbildungen einem Fahrer des Fahrzeugs anzuzeigen.

Gemäß einem dritten Aspekt betrifft die vorliegende Erfindung ein Fahrzeug mit einem Fahrzeugsteuersystem.

Die vorliegende Erfindung wird nachfolgend anhand der in den schematischen Figuren der Zeichnungen angegebenen Ausführungsbeispiele näher erläutert.

Es zeigen:
- Fig. 1: ein Flussdiagramm zur Erläuterung eines Verfahrens zum Erzeugen von kontinuierlichen Abbildungen eines gespeicherten dreidimensionalen Umfeldmodells eines Fahrzeugs gemäß einer Ausführungsform der Erfindung;
- Fig. 2: eine Draufsicht auf ein beispielhaftes Szenario zur Erläuterung des erfindungsgemäßen Verfahrens;
- Fig. 3: eine schematische Schrägansicht eines Umfeldmodells;
- Fig. 4: eine schematische Querschnittsansicht des Umfeldmodells zur Erläuterung des erfindungsgemäßen Verfahrens;
- Fig. 5: eine schematische Querschnittsansicht eines Umfeldmodells zur Erläuterung eines durch das erfindungsgemäße Verfahren vermiedenen Szenarios;
- Fig. 6: ein schematisches Blockschaltbild eines Fahrzeugsteuersystems gemäß einer Ausführungsform der Erfindung; und
- Fig. 7: ein schematisches Blockschaltbild eines Fahrzeugs gemäß einer Ausführungsform der Erfindung.

In allen Figuren sind gleiche bzw. funktionsgleiche Elemente und Vorrichtungen mit denselben Bezugszeichen versehen. Die Nummerierung der Verfahrensschritte dient der Übersichtlichkeit und soll insbesondere keine zeitliche Reihenfolge implizieren. So können auch mehrere Verfahrensschritte gleichzeitig durchgeführt werden. Sofern sinnvoll, können verschiedene Ausführungsformen beliebig miteinander kombiniert werden.

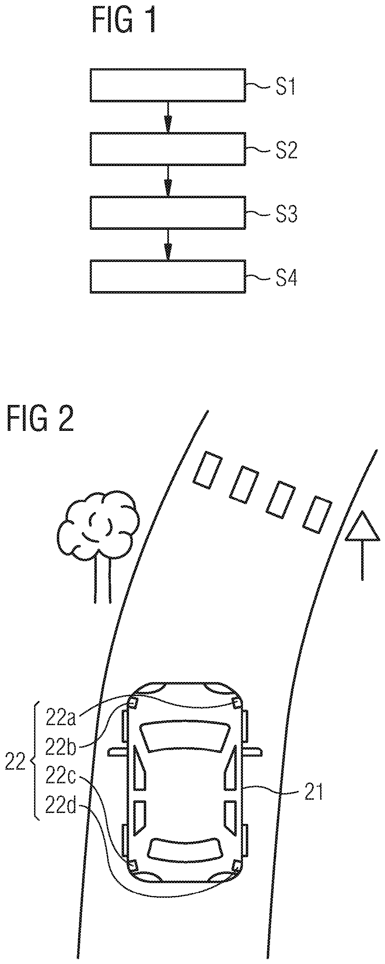

Figur 1 zeigt ein Flussdiagramm zur Erläuterung eines Verfahrens zum Erzeugen von kontinuierlichen Abbildungen eines gespeicherten dreidimensionalen Umfeldmodells eines Fahrzeugs gemäß einer Ausführungsform der Erfindung.

In Figur 2 ist ein Szenario illustriert, welches eine Draufsicht auf ein Fahrzeug 21 mit einer Kameraeinrichtung 22 zeigt. Die Kameraeinrichtung 22 des Fahrzeugs 21 umfasst eine Vielzahl von Fahrzeugkameras 22a bis 22d, welche um das Fahrzeug 21 herum angeordnet sind und eine Surround-View-Ansicht ermöglichen.

In einem ersten Verfahrensschritt S1 wird mindestens ein Kamerabild durch die Kameraeinrichtung 22 des Fahrzeugs 21 erzeugt.

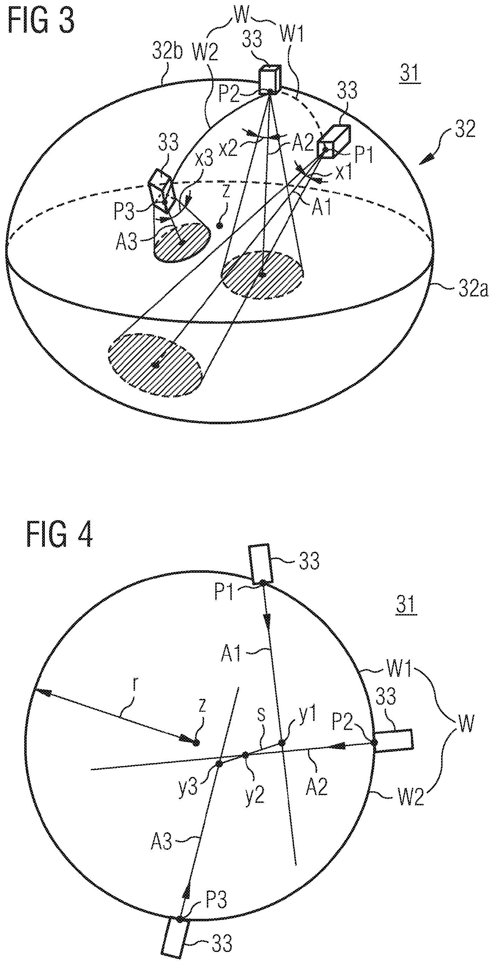

Weiter wird ein in Figur 3 illustriertes dreidimensionales Umfeldmodell 31 bereitgestellt, in welchem eine zweidimensionale Projektionsfläche 32a definiert wird. Die Projektionsfläche 32a kann beispielsweise eine flache Hyperebene oder eine Zylinderfläche in dem Umfeldmodell 31 darstellen. In der Erfindung entspricht die Projektionsfläche 32a einer in Figur 3 abgebildeten Oberfläche einer schüsselförmigen unteren Halbkugel einer Sphäre 32. Eine räumliche Position des Fahrzeugs 21 entspricht in dem Umfeldmodell 31 vorzugsweise einem Zentrum z der Sphäre 32. In einem weiteren Verfahrensschritt S2 wird das erzeugte Kamerabild auf die Projektionsfläche 32a projiziert. Bildet das mindestens eine Kamerabild eine Surround-View-Ansicht des Fahrzeugumfelds, so wird das mindestens eine Kamerabild auf die gesamte Projektionsfläche 32a projiziert. Gemäß einer Ausführungsform kann das erzeugte Kamerabild jedoch auch nur auf einen Teilbereich der Projektionsfläche 32a abgebildet bzw. projiziert werden.

In einem weiteren Verfahrensschritt S3 werden kontinuierliche Abbildungen der Projektionsfläche 32a mittels einer beweglichen virtuellen Kamera 33 erzeugt.

In einem weiteren Verfahrensschritt S4 werden die erzeugten kontinuierlichen Abbildungen ausgegeben.

Die virtuelle Kamera 33 weist eine Menge von Kameraparametern auf bzw. ist durch diese Kameraparameter gekennzeichnet. Elemente der Menge von Kameraparametern umfassen eine Kameraposition der virtuellen Kamera 33 und eine optische Achse der virtuellen Kamera 33. In Figur 3 ist die virtuelle Kamera 33 in drei Konfigurationen gekennzeichnet, welche durch eine erste Menge M1 von Kameraparametern mit einer entsprechenden Kameraposition P1 und optischen Achse A1, eine zweite Menge M2 von Kameraparametern mit entsprechender Kameraposition P2 und optischer Achse A2, und eine dritte Menge M3 von Kameraparametern mit entsprechender Kameraposition P3 und optischer Achse A3 gekennzeichnet sind. Die erste Menge M1 von Kameraparametern sowie die dritte Menge M3 von Kameraparametern sind hierbei fest vorgegeben und entsprechen einer Anfangskonfiguration bzw. Endkonfiguration der virtuellen Kamera 33. Die zweite Menge M2 entspricht einer Hilfskonfiguration, welche eine korrekte Interpolation zwischen der Anfangskonfiguration und der Endkonfiguration ermöglicht. Die Kamerapositionen P1 bis P3 der ersten bis dritten Menge M1 bis M3 liegen auf einem Großkreis, welcher sich auf einer Oberfläche 32b einer oberen Halbkugel der Sphäre 32 erstreckt. Diese Oberfläche 32b gibt die möglichen Kamerapositionen der virtuellen Kamera 33 an, das heißt, die virtuelle Kamera 33 ist prinzipiell frei auf der Oberfläche 32b verschiebbar bzw. bewegbar. Die Kameraposition kann dann beispielsweise durch Angabe von Koordinaten x, y, z des Umfeldmodells 31 angegeben werden. Vorzugsweise wird die Kameraposition durch Kugelkoordinaten r, θ, ϕ angegeben, wobei r dem Radius der Sphäre 32 entspricht, θ der Polarwinkel und ϕ der Azimutwinkel ist. Die optische Achse kann gemäß einer Ausführungsform durch entsprechende Eulerwinkel bestimmt werden. Vorzugsweise wird die optische Achse durch ein Quaternion beschrieben.

Ein Bewegungspfad W zwischen der Anfangskonfiguration und der Endkonfiguration unterteilt sich in einen ersten Bewegungspfad W1 zwischen der Kameraposition P1 der ersten Menge M1 und der Kameraposition P2 der zweiten Menge M2 sowie in einen zweiten Bewegungspfad W2 zwischen der Kameraposition P2 der zweiten Menge M2 und der Kameraposition P3 der dritten Menge M3. Die Kameraposition P2 der zweiten Menge M2 wird durch einen Punkt des Bewegungspfads W bestimmt und liegt vorzugsweise in einem mittleren Drittel des durch den Bewegungspfad W gegebenen Kreisabschnitts des entsprechenden Großkreises. Besonders bevorzugt liegt die Kameraposition P2 der zweiten Menge M2 auf dem mittleren Punkt des Bewegungspfades W.

Figur 4 zeigt eine schematische Querschnittsansicht des Umfeldmodells 31 entlang des den Bewegungspfad W enthaltenden Großkreises. Im Folgenden wird näher auf die Bestimmung der optischen Achse A2 der zweiten Menge M2 eingegangen. Hierzu wird ein erster Bezugspunkt y1 vorgegeben bzw. bestimmt, welcher auf der optischen Achse A1 der ersten Menge M1 liegt.

In der Erfindung weist der erste Bezugspunkt y1 einen Abstand von der Kameraposition P1 der ersten Menge M1 auf, welcher im Wesentlichen einem Radius r der Sphäre 32 entspricht.

Weiter wird ein zweiter Bezugspunkt y3 bestimmt, welcher ein vorgegebener Punkt der optischen Achse A3 der dritten Menge M3 von Kameraparametern ist. Ein Abstand des zweiten Bezugspunkts y3 von der Kameraposition P3 der dritten Menge M3 entspricht dem Abstand des ersten Bezugspunkts y1 von der Kameraposition P1 der ersten Menge M1 und ist ebenfalls im Wesentlichen gleich groß wie der Radius r der Sphäre 32.

Weiter wird ein Achsenpunkt y2 bestimmt, welcher auf der Verbindungsstrecke S zwischen dem ersten Bezugspunkt y1 und dem zweiten Bezugspunkt y3 liegt. Vorzugsweise liegt der Achsenpunkt y2 im Wesentlichen in einer Mitte der Verbindungsstrecke S zwischen dem ersten Bezugspunkt y1 und dem zweiten Bezugspunkt y3.

Die Kameraparameter der virtuellen Kamera 33 werden nun kontinuierlich zwischen der Anfangskonfiguration und der Endkonfiguration interpoliert. Hierzu wird die Menge der Kameraparameter entlang des ersten Bewegungspfades W1 in dem Umfeldmodell 31 kontinuierlich zwischen der ersten Menge M1 und der zweiten Menge M2 von Kameraparametern interpoliert und entlang des zweiten Bewegungspfades W2 wird die Menge von Kameraparametern kontinuierlich zwischen der zweiten Menge M2 und der dritten Menge M3 von Kameraparametern interpoliert. Vorzugsweise wird die Kameraposition der beweglichen virtuellen Kamera 33 hierbei entlang des ersten und/oder zweiten Bewegungspfades W1, W2 durch sphärisch lineare Interpolation, SLERP, durchgeführt.

Weiter wird die optische Achse der beweglichen virtuellen Kamera vorzugsweise entlang des ersten und/oder zweiten Bewegungspfades W1, W2 durch sphärisch lineare Interpolation, SLERP, durchgeführt, wobei die optische Achse vorzugsweise als Quaternion dargestellt wird.

Gemäß einer weiteren Ausführungsform umfassen die Kameraparameter weiter einen Öffnungswinkel, wobei der Öffnungswinkel entlang des ersten Bewegungspfades zwischen einem ersten Öffnungswinkel x1 der ersten Menge M1 von Kameraparametern und einem Öffnungswinkel x2 der zweiten Menge M2 von Kameraparametern interpoliert wird und der Öffnungswinkel entlang des zweiten Bewegungspfades W2 zwischen dem Öffnungswinkel x2 der zweiten Menge M2 von Kameraparametern und einem Öffnungswinkel x3 der dritten Menge M3 von Kameraparametern interpoliert wird. Vorzugsweise wird die Interpolation hierbei linear durchgeführt. Vorzugsweise wird der Öffnungswinkel der ersten Menge M1 und der zweiten Menge M2 jeweils vorgegeben und der Öffnungswinkel x2 der zweiten Menge durch lineare Interpolation bestimmt.

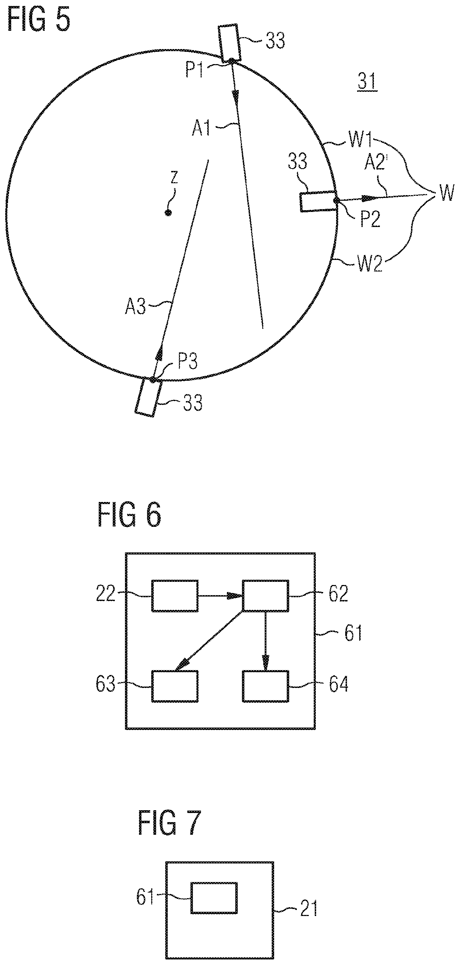

Der Effekt der Erfindung wird anhand des in Figur 5 gezeigten Querschnitts des Umfeldmodells 31 im Folgenden näher erläutert. Hierbei wird ebenfalls die Anfangskonfiguration durch die erste Menge M1 von Kameraparametern und die Endkonfiguration durch die dritte Menge M3 von Kameraparametern vorgegeben. Wird nun die Kameraposition durch sphärisch lineare Interpolation zwischen der Kameraposition P1 der ersten Menge M1 und der Kameraposition P3 der dritten Menge M3 interpoliert und gleichzeitig die optische Achse der virtuellen Kamera 33 zwischen der ersten Achse A1 der ersten Menge M1 und der dritten Achse A3 der dritten Menge M3 mittels sphärisch linearer Interpolation interpoliert, so kann der in Figur 5 illustrierte Fall auftreten, dass eine optische Achse A2' der virtuellen Kamera 33 für eine Kameraposition P2 zwischen der Kameraposition P1 der ersten Menge M1 und der Kameraposition P3 der dritten Menge M3 aus der Sphäre 32 hinaus zeigt und dadurch eine Bilderzeugung durch die virtuelle Kamera 33 erschwert oder unmöglich gemacht wird. Grund dieser Konfiguration ist, dass eine kürzeste Verbindung zwischen der optischen Achse A1 der ersten Menge M1 und der optischen Achse A3 der dritten Menge M3 einer Interpolation entspricht, welche durch Drehung der optischen Achse von dem Zentrum z weg erfolgt.

Die in Figur 5 illustrierte Situation wird erfindungsgemäß dadurch verhindert, dass die zweite Menge M2 von Kameraparametern bestimmt wird, deren optische Achse A2 bzw. Erfassungsrichtung korrekt, das heißt in Richtung des Zentrums z orientiert ist. Somit ist eine Erzeugung von kontinuierlichen Abbildungen des dreidimensionalen Umfeldmodells 31 möglich.

Die kontinuierlichen Abbildungen der Projektionsfläche 32a werden von der sich entlang des Bewegungspfades W bewegenden virtuellen Kamera 33 erzeugt, welche die durch die Interpolation erzeugten Kameraparameter aufweist.

Gemäß der Erfindung werden die kontinuierlichen Abbildungen an ein Fahrerassistenzsystem ausgegeben, welches Fahrzeugfunktionen des Fahrzeugs steuert. Beispielsweise kann das Fahrerassistenzsystem einen Einparkvorgang teilautonom oder autonom anhand der Abbildungen des Umfeldmodells 31 durchführen.

Gemäß einer weiteren Ausführungsform werden die kontinuierlichen Abbildungen auf einer Anzeigeeinrichtung einem Fahrer des Fahrzeugs angezeigt.

Figur 6 zeigt ein Blockschaltbild eines Fahrzeugsteuersystems 61 eines Fahrzeugs 21 zum Erzeugen von kontinuierlichen Abbildungen eines gespeicherten dreidimensionalen Umfeldmodells 31 des Fahrzeugs 21 gemäß einer Ausführungsform der Erfindung. Das Fahrzeugsteuersystem 61 weist eine Kameraeinrichtung 22 des Fahrzeugs 21 auf, welche eine oder mehrere Fahrzeugkameras umfassen kann. Weiter umfasst das Fahrzeugsteuersystem 61 eine Recheneinrichtung 62, welche dazu ausgebildet ist, das erzeugte Kamerabild auf eine Projektionsfläche in dem gespeicherten dreidimensionalen Umfeldmodell 31 des Fahrzeugs zu projizieren. Das Umfeldmodell 31 kann vorzugsweise auf einer Speichereinrichtung des Fahrzeugsteuersystems 61 gespeichert werden oder der Recheneinrichtung 62 über ein Netzwerk bereitgestellt werden. Das Umfeldmodell 31 kann weitere Informationen beinhalten, welche insbesondere durch Abstandssensoren, Radarsensoren, Infrarotbilder oder Lidarsensoren des Fahrzeugs dem Fahrzeugsteuersystem 61 bereitgestellt werden.

Die Recheneinrichtung 62 ist weiter dazu ausgebildet, kontinuierliche Abbildungen der Projektionsfläche 32a mittels einer beweglichen virtuellen Kamera 33 zu erzeugen. Die virtuelle Kamera 33 bewegt sich hierbei entlang eines Bewegungspfades W, welcher einen ersten Bewegungspfad W1 und einen zweiten Bewegungspfad W2 aufweist. Die virtuelle Kamera 33 weist eine Menge von Kameraparametern auf, deren Elemente eine Kameraposition der virtuellen Kamera 33 und eine optische Achse der virtuellen Kamera 33 umfassen.

Die Recheneinrichtung 62 ist dazu ausgebildet, die Menge von Kameraparametern entlang des ersten Bewegungspfades W1 in dem Umfeldmodell 31 kontinuierlich zwischen einer vorgegebenen ersten Menge M1 von Kameraparametern und einer vorgegebenen zweiten Menge M2 von Kameraparametern zu interpolieren. Weiter ist die Recheneinrichtung 62 dazu ausgebildet, die Menge von Kameraparametern der virtuellen Kamera 33 entlang des zweiten Bewegungspfades W2 in dem Umfeldmodell 31 kontinuierlich zwischen der zweiten Menge M2 von Kameraparametern und einer vorgegebenen dritten Menge M3 von Kameraparametern zu interpolieren. Die erste Menge M1 und die dritte Menge M3 von Kameraparametern werden vorgegeben und entsprechend einer Anfangs- und Endkonfiguration der virtuellen Kamera 33. Die Kameraposition P2 der zweiten Menge M2 von Kameraparametern entspricht einem Punkt auf dem Bewegungspfad W, welcher insbesondere durch Verbinden der Kameraposition P1 der ersten Menge M1 und der Kameraposition P3 der dritten Menge M3 mittels eines in Figur 31 illustrierten Großkreises durch die Recheneinrichtung 62 bestimmt werden kann.

Die Recheneinrichtung ist dazu ausgebildet, die optische Achse A2 der zweiten Menge M2 von Kameraparametern derart festzulegen, dass diese durch einen vorgegebenen Achsenpunkt y2 verläuft, welcher auf einer Verbindungsstrecke S zwischen einem ersten Bezugspunkt y1 und einem zweiten Bezugspunkt y3 liegt. Der erste bzw. zweite Bezugspunkt y1, y3 entspricht hierbei einem vorgegebenen Punkt der optischen Achse A1, A2 der ersten Menge M1 bzw. dritten Menge M3. Insbesondere kann die Recheneinrichtung 62 die zweite Menge M2 von Kameraparametern gemäß dem oben beschriebenen Verfahren festlegen.

Das Fahrzeugsteuersystem 61 umfasst weiter eine Ausgabeeinrichtung 63, welche dazu ausgebildet ist, die erzeugten kontinuierlichen Abbildungen auszugeben. Die Ausgabeeinrichtung 63 kann eine Schnittstelle, insbesondere eine Kabelverbindung, eine USB-Schnittstelle oder eine kabellose Schnittstelle aufweisen. Die erzeugten Abbildungen sind insbesondere über die Ausgabeeinrichtung 63 an weitere Geräte oder via Car-to-Car-Kommunikation an weitere Fahrzeuge übertragbar.

Das Fahrzeugsteuersystem 61 umfasst weiter ein Fahrerassistenzsystem 64, welches dazu ausgebildet ist, anhand der ausgegebenen kontinuierlichen Abbildungen eine Fahrzeugfunktion des Fahrzeugs 21 zu steuern.

Optional umfasst die Ausgabeeinrichtung 63 weiter eine Anzeigeeinrichtung, etwa ein Fahrzeugdisplay, welche dazu ausgebildet ist, die ausgegebenen kontinuierlichen Abbildungen einem Fahrer des Fahrzeugs anzuzeigen.

Figur 7 zeigt ein Blockschaltbild eines Fahrzeugs 21 mit einem Fahrzeugsteuersystem 61, insbesondere gemäß einer der oben beschriebenen Ausführungsformen der Erfindung.

### BEZUGSZEICHENLISTE

- 21: Fahrzeug
- 22: Kameraeinrichtung
- 22a bis 22d: Fahrzeugkameras
- 31: Umfeldmodell
- 32: Sphäre
- 32a: Projektionsfläche
- 32b: Oberfläche der oberen Halbkugel der Sphäre
- 33: virtuelle Kamera
- 61: Fahrzeugsteuersystem
- 62: Recheneinrichtung
- 63: Ausgabeeinrichtung
- 64: Fahrerassistenzsystem
- A1: optische Achse der virtuellen Kamera der ersten Menge
- A2: optische Achse der virtuellen Kamera der zweiten Menge
- A3: optische Achse der virtuellen Kamera der dritten Menge
- P1: Kameraposition der virtuellen Kamera der ersten Menge
- P2: Kameraposition der virtuellen Kamera der zweiten Menge
- P3: Kameraposition der virtuellen Kamera der dritten Menge
- r: Radius der Sphäre
- S: Verbindungsstrecke
- W: Bewegungspfad
- W1: erster Bewegungspfad
- W2: zweiter Bewegungspfad
- x1: Öffnungswinkel der virtuellen Kamera der ersten Menge
- x2: Öffnungswinkel der virtuellen Kamera der zweiten Menge
- x3: Öffnungswinkel der virtuellen Kamera der dritten Menge
- y1: erster Bezugspunkt
- y2: Achsenpunkt
- y3: zweiter Bezugspunkt
- z: Zentrum der Sphäre

## Patentansprüche

1. Verfahren zum Erzeugen von kontinuierlichen Abbildungen eines gespeicherten dreidimensionalen Umfeldmodells (31) eines Fahrzeugs (21), mit den Schritten:
Erzeugen (S1) mindestens eines Kamerabildes durch eine Kameraeinrichtung (22) des Fahrzeugs (21);
Projizieren (S2) des erzeugten Kamerabildes auf eine Projektionsfläche (32a) in dem gespeicherten dreidimensionalen Umfeldmodell (31) des Fahrzeugs (21);
Erzeugen (S3) von kontinuierlichen Abbildungen der Projektionsfläche (32a) mittels einer beweglichen virtuellen Kamera (33); und
Ausgeben (S4) der erzeugten kontinuierlichen Abbildungen;
wobei die virtuelle Kamera (33) eine Menge von Kameraparametern aufweist, deren Elemente eine Kameraposition (P1, P2, P3) der virtuellen Kamera (33) und eine optische Achse (A1, A2, A3) der virtuellen Kamera (33) umfassen;
wobei die Menge von Kameraparametern entlang eines ersten Bewegungspfades (W1) in dem Umfeldmodell (31) kontinuierlich zwischen einer vorgegebenen ersten Menge von Kameraparametern und einer zweiten Menge von Kameraparametern interpoliert wird, und entlang eines zweiten Bewegungspfades (W2) in dem Umfeldmodell (31) kontinuierlich zwischen der zweiten Menge von Kameraparametern und einer vorgegebenen dritten Menge von Kameraparametern interpoliert wird; und
wobei diejenige optische Achse (A2) der virtuellen Kamera (33), welche ein Element der zweiten Menge von
Kameraparametern ist, wird derart bestimmt, dass sie durch einen
Achsenpunkt (y2) verläuft, welcher auf einer Verbindungsstrecke (S) zwischen einem ersten Bezugspunkt (y1) und einem zweiten Bezugspunkt (y3) liegt, wobei der erste Bezugspunkt (y1) ein vorgegebener Punkt derjenigen optischen Achse (A1) der virtuellen Kamera (33) ist, welche ein Element der ersten Menge von Kameraparametern ist, und der zweite Bezugspunkt (y3) ein vorgegebener Punkt derjenigen optischen Achse (A3) der virtuellen Kamera (33) ist, welche ein Element der
dritten Menge von Kameraparametern ist;
wobei die Projektionsfläche (32a) einer Oberfläche einer schlüsselförmigen unteren Halbkugel einer Sphäre (32) entspricht und eine räumliche Position des Fahrzeugs (21) in dem Umfeldmodell (31) dem Zentrum (z) der Sphäre (32) entspricht; wobei
der erste Bewegungspfad (W1) und der zweite Bewegungspfad (W2) auf einem Kreis liegen, welcher sich auf einer Oberfläche (32b) einer oberen Halbkugel der Sphäre (32) erstreckt; wobei
der erste Bezugspunkt (y1) einen Abstand von der Kameraposition (P1) der ersten Menge (M1) aufweist, welcher im Wesentlichen dem Radius (r) der Sphäre (32) entspricht; und
der Abstand des zweiten Bezugspunkts (y3) von der Kameraposition (P3) der dritten Menge (M3) dem Abstand des ersten Bezugspunkts (y1) von der Kameraposition (P1) der ersten Menge (M1) entspricht; wobei
ein Fahrerassistenzsystem (64) anhand der ausgegebenen kontinuierlichen Abbildungen eine Fahrzeugfunktion des Fahrzeugs (21) steuert.

2. Verfahren nach Anspruch 1, wobei der erste Bewegungspfad (W1) und der zweite Bewegungspfad (W2) in dem Umfeldmodell (31) einen Kreisabschnitt beschreiben.

3. Verfahren nach Anspruch 2, wobei die Interpolation der Kameraposition (P1, P2, P3) der beweglichen virtuellen Kamera (33) entlang des ersten Bewegungspfades (W1) und/oder entlang des zweiten Bewegungspfades (W2) durch sphärische lineare Interpolation, SLERP, durchgeführt wird.

4. Verfahren nach einem der Ansprüche 2 oder 3, wobei die Interpolation der optischen Achse (A1, A2, A3) der beweglichen virtuellen Kamera (33) entlang des ersten Bewegungspfades (W1) und/oder entlang des zweiten Bewegungspfades (W2) durch sphärische lineare Interpolation, SLERP, durchgeführt wird.

5. Verfahren nach einem der Ansprüche 2 bis 4, wobei die Kamerapositipn (P2), welche ein Element der zweiten Menge von Kameraparametern ist, in einem mittleren Drittel des Kreisabschnitts, insbesondere auf einem mittleren Punkt des Kreisabschnitts liegt.

6. Verfahren nach einem der vorangehenden Ansprüche, wobei ein Abstand des ersten Bezugspunkts (y1) von derjenigen Kameraposition (P1), welche ein Element der ersten Menge von Kameraparametern ist, im Wesentlichen gleich groß ist wie ein Abstand des zweiten Bezugspunkts (y3) von derjenigen Kameraposition (P3), welche ein Element der dritten Menge von Kameraparametern ist.

7. Verfahren nach einem der vorangehenden Ansprüche, wobei der Achsenpunkt (y2) im Wesentlichen in einer Mitte der Verbindungsstrecke (S) zwischen dem ersten Bezugspunkt (y1) und dem zweiten Bezugspunkt (y3) liegt.

8. Verfahren nach einem der vorangehenden Ansprüche, wobei die ausgegebenen kontinuierlichen Abbildungen auf einer Anzeigeeinrichtung einem Fahrer des Fahrzeugs angezeigt werden.

9. Fahrzeugsteuersystem (61) eines Fahrzeugs (21) zum Erzeugen von kontinuierlichen Abbildungen eines gespeicherten dreidimensionalen Umfeldmodells (31) des Fahrzeugs (21), mit:
einer Kameraeinrichtung (22) des Fahrzeugs (21) zum Erzeugen von mindestens einem Kamerabild;
einer Recheneinrichtung (62), welche dazu ausgebildet ist, das erzeugte Kamerabildes auf eine Projektionsfläche (32a) in dem gespeicherten dreidimensionalen Umfeldmodell (31) des Fahrzeugs (21) zu projizieren, und mittels einer beweglichen virtuellen Kamera (33) kontinuierliche Abbildungen der Projektionsfläche (32a) zu erzeugen; und
einer Ausgabeeinrichtung (63), welche dazu ausgebildet ist, die erzeugten kontinuierlichen Abbildungen auszugeben,
wobei die virtuelle Kamera (33) eine Menge von Kameraparametern aufweist, deren Elemente eine Kameraposition (P1, P2, P3) der virtuellen Kamera (33) und eine optische Achse (A1, A2, A3) der virtuellen Kamera (33) umfassen,
wobei die Recheneinrichtung (62) dazu ausgebildet ist, die Menge von Kameraparametern entlang eines ersten Bewegungspfades (W1) in dem Umfeldmodell (31) kontinuierlich zwischen einer vorgegebenen ersten Menge von Kameraparametern und einer zweiten Menge von Kameraparametern zu interpolieren, und entlang eines zweiten Bewegungspfades (W2) in dem Umfeldmodell (31) kontinuierlich zwischen der zweiten Menge von Kameraparametern und einer vorgegebenen dritten Menge von Kameraparametern zu interpolieren, und
wobei die Recheneinrichtung (62) weiter dazu ausgebildet ist, diejenige optische Achse (A2) der virtuellen Kamera (33), welche ein Element der zweiten Menge von Kameraparametern ist, derart zu bestimmen, dass sie durch einen Achsenpunkt (y2) verläuft, welcher auf einer Verbindungsstrecke (S) zwischen einem ersten Bezugspunkt (y1) und einem zweiten Bezugspunkt (y3) liegt, wobei der erste Bezugspunkt (y1) ein vorgegebener Punkt derjenigen optischen Achse (A1) der virtuellen Kamera (33) ist, welche ein Element der ersten Menge von Kameraparametern ist, und der zweite Bezugspunkt (y3) ein vorgegebener Punkt derjenigen optischen Achse (A3) der virtuellen Kamera (33) ist, welche ein Element der dritten Menge von Kameraparametern ist,
wobei die Projektionsfläche (32a) einer Oberfläche einer schlüsselförmigen unteren Halbkugel einer Sphäre (32) entspricht und eine räumliche Position des Fahrzeugs (21) in dem Umfeldmodell (31) dem Zentrum (z) der Sphäre (32) entspricht; wobei
der erste Bewegungspfad (W1) und der zweite Bewegungspfad (W2) auf einem Kreis liegen, welcher sich auf einer Oberfläche (32b) einer oberen Halbkugel der Sphäre (32) erstreckt; wobei
der erste Bezugspunkt (y1) einen Abstand von der Kameraposition (P1) der ersten Menge (M1) aufweist, welcher im Wesentlichen dem Radius (r) der Sphäre (32) entspricht; und
der Abstand des zweiten Bezugspunkts (y3) von der Kameraposition (P3) der dritten Menge (M3) dem Abstand des ersten Bezugspunkts (y1) von der Kameraposition (P1) der ersten Menge (M1) entspricht; und
ein Fahrerassistenzsystem (64), welches dazu ausgebildet ist, anhand der ausgegebenen kontinuierlichen Abbildungen eine Fahrzeugfunktion des Fahrzeugs (21) zu steuern.

10. Fahrzeugsteuersystem (61) nach Anspruch 9, wobei der erste Bewegungspfad (W1) und der zweite
Bewegungspfad (W2) in dem Umfeldmodell (31) einen Kreisabschnitt beschreiben.

11. Fahrzeugsteuersystem (61) nach einem der Ansprüche 9 oder 10, wobei die Recheneinrichtung (62) dazu ausgebildet ist, die Kameraposition (P1, P2, P3) der beweglichen virtuellen Kamera (33) entlang des ersten Bewegungspfades (W1) und/oder entlang des zweiten Bewegungspfades (W2) durch sphärische lineare Interpolation, SLERP, zu interpolieren.

12. Fahrzeugsteuersystem (61) nach einem der Ansprüche 9 bis 11, wobei die Ausgabeeinrichtung (63) eine Anzeigeeinrichtung umfasst, welche dazu ausgebildet ist, die ausgegebenen kontinuierlichen Abbildungen einem Fahrer des Fahrzeugs (21) anzuzeigen.

13. Fahrzeug (21) mit einem Fahrzeugsteuersystem (61) gemäß einem der Ansprüche 9 bis 12.

## Claims

1. Method for producing continuous images of a stored three-dimensional vicinity model (31) of a vehicle (21), comprising the steps of:
producing (S1) at least one camera image by way of a camera device (22) of the vehicle (21);
projecting (S2) the produced camera image onto a projection surface (32a) in the stored three-dimensional vicinity model (31) of the vehicle (21);
producing (S3) continuous images of the projection surface (32a) using a movable virtual camera (33); and
outputting (S4) the continuous images produced;
wherein the virtual camera (33) has a set of camera parameters the elements of which comprise a camera position (P1, P2, P3) of the virtual camera (33) and an optical axis (A1, A2, A3) of the virtual camera (33);
wherein the set of camera parameters is continuously interpolated along a first movement path (W1) in the vicinity model (31) between a specified first set of camera parameters and a second set of camera parameters and is continuously interpolated along a second movement path (W2) in the vicinity model (31) between the second set of camera parameters and a specified third set of camera parameters; and
wherein that optical axis (A2) of the virtual camera (33) which is an element of the second set of camera parameters is determined such that it extends through an axis point (y2) located on a connecting line (S) between a first reference point (y1) and a second reference point (y3), with the first reference point (y1) being a specified point of that optical axis (A1) of the virtual camera (33) which is an element of the first set of camera parameters and the second reference point (y3) being a specified point of that optical axis (A3) of the virtual camera (33) which is an element of the third set of camera parameters;
wherein the projection surface (32a) corresponds to a surface of a bowl-shaped lower hemisphere of a sphere (32) and a spatial position of the vehicle (21) in the vicinity model (31) corresponds to the centre (z) of the sphere (32); wherein the first movement path (W1) and the second movement path (W2) lie on a circle extending on a surface (32b) of an upper hemisphere of the sphere (32); wherein the first reference point (y1) has a distance from the camera position (P1) of the first set (M1) that substantially corresponds to the radius (r) of the sphere (32); and
the distance of the second reference point (y3) from the camera position (P3) of the third set (M3) corresponds to the distance of the first reference point (y1) from the camera position (P1) of the first set (M1);
wherein a driver assistance system (64) controls a vehicle function of the vehicle (21) on the basis of the output continuous images.

2. Method according to Claim 1, wherein the first movement path (W1) and the second movement path (W2) in the vicinity model (31) describe a circular segment.

3. Method according to Claim 2, wherein the interpolation of the camera position (P1, P2, P3) of the movable virtual camera (33) along the first movement path (W1) and/or along the second movement path (W2) is performed by way of spherical linear interpolation, SLERP.

4. Method according to either of Claims 2 and 3, wherein the interpolation of the optical axis (A1, A2, A3) of the movable virtual camera (33) along the first movement path (W1) and/or along the second movement path (W2) is performed by spherical linear interpolation, SLERP.

5. Method according to one of Claims 2 to 4, wherein the camera position (P2) that is an element of the second set of camera parameters is located in a middle third of the circular segment, in particular on a centre point of the circular segment.

6. Method according to one of the preceding claims, wherein a distance of the first reference point (y1) from that camera position (P1) which is an element of the first set of camera parameters is substantially the same size as a distance of the second reference point (y3) from that camera position (P3) which is an element of the third set of camera parameters.

7. Method according to one of the preceding claims, wherein the axis point (y2) substantially lies in a centre of the connecting line (S) between the first reference point (y1) and the second reference point (y3).

8. Method according to one of the preceding claims, wherein the output continuous images are displayed to a driver of the vehicle on a display device.

9. Vehicle control system (61) of a vehicle (21) for producing continuous images of a stored three-dimensional vicinity model (31) of the vehicle (21), comprising:
a camera device (22) of the vehicle (21) for producing at least one camera image;
a computing device (62) embodied to project the camera image produced onto a projection surface (32a) in the stored three-dimensional vicinity model (31) of the vehicle (21) and to produce continuous images of the projection surface (32a) using a movable virtual camera (33); and
an output device (63) embodied to output the continuous images produced,
wherein the virtual camera (33) has a set of camera parameters the elements of which comprise a camera position (P1, P2, P3) of the virtual camera (33) and an optical axis (A1, A2, A3) of the virtual camera (33);
wherein the computing device (62) is embodied to continuously interpolate the set of camera parameters along a first movement path (W1) in the vicinity model (31) between a specified first set of camera parameters and a second set of camera parameters and to continuously interpolate the set of camera parameters along a second movement path (W2) in the vicinity model (31) between the second set of camera parameters and a specified third set of camera parameters, and
wherein the computing device (62) is furthermore embodied to determine that optical axis (A2) of the virtual camera (33) which is an element of the second set of camera parameters such that it extends through an axis point (y2) located on a connecting line (S) between a first reference point (y1) and a second reference point (y3), with the first reference point (y1) being a specified point of that optical axis (A1) of the virtual camera (33) which is an element of the first set of camera parameters and the second reference point (y3) being a specified point of that optical axis (A3) of the virtual camera (33) which is an element of the third set of camera parameters;
wherein the projection surface (32a) corresponds to a surface of a bowl-shaped lower hemisphere of a sphere (32) and a spatial position of the vehicle (21) in the vicinity model (31) corresponds to the centre (z) of the sphere (32); wherein the first movement path (W1) and the second movement path (W2) lie on a circle extending on a surface (32b) of an upper hemisphere of the sphere (32); wherein the first reference point (y1) has a distance from the camera position (P1) of the first set (M1) that substantially corresponds to the radius (r) of the sphere (32); and
the distance of the second reference point (y3) from the camera position (P3) of the third set (M3) corresponds to the distance of the first reference point (y1) from the camera position (P1) of the first set (M1); and
a driver assistance system (64) that is embodied to control a vehicle function of the vehicle (21) on the basis of the output continuous images.

10. Vehicle control system (61) according to Claim 9, wherein the first movement path (W1) and the second movement path (W2) in the vicinity model (31) describe a circular segment.

11. Vehicle control system (61) according to either of Claims 9 and 10, wherein the computing device (62) is embodied to interpolate the camera position (P1, P2, P3) of the movable virtual camera (33) along the first movement path (W1) and/or along the second movement path (W2) by way of spherical linear interpolation, SLERP.

12. Vehicle control system (61) according to one of Claims 9 to 11, wherein the output device (63) comprises a display device that is embodied to display the output continuous images to a driver of the vehicle (21).

13. Vehicle (21) having a vehicle control system (61) according to one of Claims 9 to 12.

## Revendications

1. Procédé pour générer des représentations continues d'un modèle d'environnement tridimensionnel (31) mémorisé d'un véhicule (21), comprenant les étapes suivantes :
génération (S1) d'au moins une image de caméra par un dispositif à caméra (22) du véhicule (21) ;
projection (S2) de l'image de caméra générée sur une surface de projection (32a) dans le modèle d'environnement tridimensionnel (31) mémorisé du véhicule (21) ;
génération (S3) de représentations continues de la surface de projection (32a) au moyen d'une caméra virtuelle (33) mobile ; et
diffusion (S4) des représentations continues générées ;
la caméra virtuelle (33) possédant un ensemble de paramètres de caméra dont les éléments comprennent une position de caméra (P1, P2, P3) de la caméra virtuelle (33) et un axe optique (A1, A2, A3) de la caméra virtuelle (33) ;
l'ensemble de paramètres de caméra étant continuellement interpolé entre un premier ensemble de paramètres de caméra et un deuxième ensemble de paramètres de caméra le long d'un premier trajet de déplacement (W1) dans le modèle d'environnement (31), et étant continuellement interpolé entre le deuxième ensemble de paramètres de caméra et un troisième ensemble prédéfini de paramètres de caméra le long d'un deuxième trajet de déplacement (W2) dans le modèle d'environnement (31) ; et
l'axe optique (A2) de la caméra virtuelle (33) qui est un élément du deuxième ensemble de paramètres de caméra étant déterminé de telle sorte qu'il passe par un point d'axe (y2) qui se trouve sur un segment de liaison (S) entre un premier point de référence (y1) et un deuxième point de référence (y3), le premier point de référence (y1) étant un point prédéfini de l'axe optique (A1) de la caméra virtuelle (33) qui est un élément du premier ensemble de paramètres de caméra, et le deuxième point de référence (y3) étant un point prédéfini de l'axe optique (A3) de la caméra virtuelle (33) qui est un élément du troisième ensemble de paramètres de caméra ;
la surface de projection (32a) correspondant à une surface d'un hémisphère inférieur en forme de cuvette d'une sphère (32) et une position dans l'espace du véhicule (21) dans le modèle d'environnement (31) correspondant au centre (z) de la sphère (32) ;
le premier trajet de déplacement (W1) et le deuxième trajet de déplacement (W2) se trouvant sur un cercle qui s'étend sur une surface (32b) d'un hémisphère supérieur de la sphère (32) ;
le premier point de référence (y1) présentant un écart par rapport à la position de caméra (P1) du premier ensemble (M1), lequel correspond sensiblement au rayon (r) de la sphère (32) ; et
l'écart entre le deuxième point de référence (y3) et la position de caméra (P3) du troisième ensemble (M3) correspondant à l'écart entre le premier point de référence (y1) et la position de caméra (P1) du premier ensemble (M1) ;
un système d'assistance au conducteur (64) commandant une fonction de véhicule du véhicule (21) à l'aide des représentations continues diffusées.

2. Procédé selon la revendication 1, le premier trajet de déplacement (W1) et le deuxième trajet de déplacement (W2) décrivant un segment de cercle dans le modèle d'environnement (31) .

3. Procédé selon la revendication 2, l'interpolation de la position de caméra (P1, P2, P3) de la caméra virtuelle (33) mobile le long du premier trajet de déplacement (W1) et/ou le long du deuxième trajet de déplacement (W2) étant effectuée par une interpolation linéaire sphérique, SLERP.

4. Procédé selon l'une des revendications 2 ou 3, l'interpolation de l'axe optique (A1, A2, A3) de la caméra virtuelle (33) mobile le long du premier trajet de déplacement (W1) et/ou le long du deuxième trajet de déplacement (W2) étant effectuée par une interpolation linéaire sphérique, SLERP.

5. Procédé selon l'une des revendications 2 à 4, la position de caméra (P2), qui est un élément du deuxième ensemble de paramètres de caméra, se trouvant dans un tiers central du segment de cercle, notamment sur un point central du segment de cercle.

6. Procédé selon l'une des revendications précédentes, un écart entre le premier point de référence (y1) et la position de caméra (P1) qui est un élément du premier ensemble de paramètres de caméra étant sensiblement égal à un écart entre le deuxième point de référence (y3) et la position de caméra (P3) qui est un élément du troisième ensemble de paramètres de caméra.

7. Procédé selon l'une des revendications précédentes, le point d'axe (y2) se trouvant sensiblement en un centre du segment de liaison (S) entre le premier point de référence (y1) et le deuxième point de référence (y3).

8. Procédé selon l'une des revendications précédentes, les représentations continues diffusées étant affichées sur un dispositif d'affichage à l'attention d'un conducteur du véhicule.

9. Système de commande de véhicule (61) d'un véhicule (21) destiné à générer des représentations continues d'un modèle d'environnement tridimensionnel (31) mémorisé du véhicule (21), comprenant :
un dispositif à caméra (22) du véhicule (21) servant à générer au moins une image de caméra ;
un dispositif de calcul (62) qui est configuré pour projeter l'image de caméra générée sur une surface de projection (32a) dans le modèle d'environnement tridimensionnel (31) mémorisé du véhicule (21), et pour générer des représentations continues de la surface de projection (32a) au moyen d'une caméra virtuelle (33) mobile ; et
un dispositif de diffusion (63) qui est configuré pour diffuser les représentations continues générées,
la caméra virtuelle (33) possédant un ensemble de paramètres de caméra dont les éléments comprennent une position de caméra (P1, P2, P3) de la caméra virtuelle (33) et un axe optique (A1, A2, A3) de la caméra virtuelle (33),
le dispositif de calcul (62) étant configuré pour interpoler continuellement l'ensemble de paramètres de caméra entre un premier ensemble de paramètres de caméra et un deuxième ensemble de paramètres de caméra le long d'un premier trajet de déplacement (W1) dans le modèle d'environnement (31), et pour l'interpoler continuellement entre le deuxième ensemble de paramètres de caméra et un troisième ensemble prédéfini de paramètres de caméra le long d'un deuxième trajet de déplacement (W2) dans le modèle d'environnement (31), et
le dispositif de calcul (62) étant en outre configuré pour déterminer l'axe optique (A2) de la caméra virtuelle (33), qui est un élément du deuxième ensemble de paramètres de caméra, de telle sorte qu'il passe par un point d'axe (y2) qui se trouve sur un segment de liaison (S) entre un premier point de référence (y1) et un deuxième point de référence (y3), le premier point de référence (y1) étant un point prédéfini de l'axe optique (A1) de la caméra virtuelle (33) qui est un élément du premier ensemble de paramètres de caméra, et le deuxième point de référence (y3) étant un point prédéfini de l'axe optique (A3) de la caméra virtuelle (33) qui est un élément du troisième ensemble de paramètres de caméra,
la surface de projection (32a) correspondant à une surface d'un hémisphère inférieur en forme de cuvette d'une sphère (32) et une position dans l'espace du véhicule (21) dans le modèle d'environnement (31) correspondant au centre (z) de la sphère (32) ;
le premier trajet de déplacement (W1) et le deuxième trajet de déplacement (W2) se trouvant sur un cercle qui s'étend sur une surface (32b) d'un hémisphère supérieur de la sphère (32) ;
le premier point de référence (y1) présentant un écart par rapport à la position de caméra (P1) du premier ensemble (M1), lequel correspond sensiblement au rayon (r) de la sphère (32) ; et
l'écart entre le deuxième point de référence (y3) et la position de caméra (P3) du troisième ensemble (M3) correspondant à l'écart entre le premier point de référence (y1) et la position de caméra (P1) du premier ensemble (M1) ; et
un système d'assistance au conducteur (64), lequel est configuré pour commander une fonction de véhicule du véhicule (21) à l'aide des représentations continues diffusées.

10. Système de commande de véhicule (61) selon la revendication 9, le premier trajet de déplacement (W1) et le deuxième trajet de déplacement (W2) décrivant un segment de cercle dans le modèle d'environnement (31).

11. Système de commande de véhicule (61) selon l'une des revendications 9 ou 10, l'unité de calcul (62) étant configurée pour interpoler la position de caméra (P1, P2, P3) de la caméra virtuelle (33) mobile le long du premier trajet de déplacement (W1) et/ou le long du deuxième trajet de déplacement (W2) par une interpolation linéaire sphérique, SLERP.

12. Système de commande de véhicule (61) selon l'une des revendications 9 à 11, le dispositif de diffusion (63) comportant un dispositif d'affichage qui est configuré pour afficher les représentations continues diffusées à l'attention d'un conducteur du véhicule (21).

13. Véhicule (21) comprenant un système de commande de véhicule (61) selon l'une des revendications 9 à 12.
